# EUROPEAN PATENT APPLICATION

(11) **EP 3 696 709 A1**
(43) Date of publication of application: **19.08.2020**
(21) Application number: 19182163.6
(22) Date of filing: 25.06.2019
(51) Int. Cl.: G06F 30/10, G06F 119/18

(54) **EXPERT KNOWLEDGE FRAMEWORK DRIVEN HYBRID MANUFACTURING SYSTEMS AND METHODS**

(30) Priority: 14.02.2019 US 201916276448
(71) Applicant: Siemens Industry Software Inc., Plano, TX 75024-6612 (US)
(72) Inventor: REINHARD, Wesley, Plainsboro, NJ 08536 (US); ARVANITIS, Elena, Somerville, NJ 08876 (US); SRIVASTAVA, Sanjeev, Princetown Junction, NJ 08550 (US); MADELEY, David, Louth, LN11 8QY (GB); MUSUVATHY, Suraj Ravi, Princeton, NJ 08540 (US); REN, Guannan, Monmouth Junction, NJ 08852 (US)
(74) Representative: Horn Kleimann Waitzhofer Patentanwälte PartG mbB

(57) **Abstract**

Methods (600) for hybrid manufacturing and planning and corresponding systems (700) and computer-readable mediums (726). A method includes receiving (602), by the data processing system (700), a computer-aided-design (CAD) model (750) of a part to be manufactured and tools definitions (752) of tools available for a manufacturing process. The method includes instantiating (604) a virtual workpiece (754). The method includes instantiating (606) the tools definitions (752) against a manufacturing ontology (756) to produce virtual tools (758). The method includes receiving (608) operations (764) for the virtual tools (758). The method includes searching (610) for combinations of the operations (764) to be performed on the virtual workpiece (754) to make the virtual workpiece (754) correspond to the CAD model (750). The method includes identifying (612) possible manufacturing solutions (760) according to the search. The method includes selecting (614) a manufacturing plan (762) from the possible manufacturing solutions (760).

## Description

### TECHNICAL FIELD

The present disclosure is directed, in general, to systems and methods for hybrid manufacturing systems and methods.

### BACKGROUND OF THE DISCLOSURE

Traditionally, machine manufacturing systems have concentrated on subtractive manufacturing, where a "blank" or other workpiece is machined to remove portions, such as by milling, drilling, etc., to shape the workpiece. More recently, additive manufacturing systems such as 3D printing have been developed, which build the workpiece by adding material in the desired shapes, plus any required additional portions such as support structures. Individually, each of these approaches has weaknesses and inefficiencies. Improved systems are desirable.

### SUMMARY OF THE DISCLOSURE

Various disclosed embodiments include methods for hybrid manufacturing and planning and corresponding systems and computer-readable mediums. A method includes receiving, by a data processing system, a computer-aided-design (CAD) model of a part to be manufactured and tools definitions of tools available for a manufacturing process. The method includes instantiating a virtual workpiece. The method includes instantiating the tools definitions against a manufacturing ontology to produce virtual tools. The method includes receiving operations for the virtual tools. The method includes searching for combinations of the operations to be performed on the virtual workpiece to make the virtual workpiece correspond to the CAD model. The method includes identifying possible manufacturing solutions according to the search. The method includes selecting a manufacturing plan from the possible manufacturing solutions.

Some embodiments also include physically manufacturing the part from a physical workpiece according to the selected manufacturing plan. In some embodiments, the virtual workpiece is stored as a graph-based representation including a plurality of nodes and edges, each node representing a surface. In some embodiments, the operations define how each virtual tool can act on the virtual workpiece. In some embodiments, the operations include both additive-manufacturing operations and subtractive-manufacturing operations. In some embodiments, each operation includes a region, a modifier, and a tool. In some embodiments, the data processing system performs hierarchical abstraction to partition the search into a plurality of domains. In some embodiments, the data processing system applies update rules or transformations to modify a state of the virtual workpiece. In some embodiments, the search is performed using an A* algorithm.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a functional block diagram of elements of a hybrid manufacturing system in accordance with disclosed embodiments;
Figure 2 illustrates an example of a workpiece state as graph-based workpiece representation in accordance with disclosed embodiments;
Figure 3 illustrates an example of subtractive manufacturing tools being linked to a rule primitive describing how to remove material through the manufacturing ontology in accordance with disclosed embodiments;
Figure 4 illustrates combining rule primitives to form a complete update rule in accordance with disclosed embodiments;
Figure 5 illustrates a schematic representation of partitioning in accordance with disclosed embodiments;
Figure 6 illustrates a process in accordance with disclosed embodiments; and
Figure 7 illustrates a block diagram of a data processing system in which an embodiment can be implemented.

### DETAILED DESCRIPTION

The Figures discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

As manufacturing tools continue to become increasingly sophisticated, the burden placed on human experts to efficiently deploy these tools has risen in turn. This is especially true in the area of additive manufacturing, which provides a large increase in the number of ways a workpiece can be modified to achieve a target outcome. For example, additive operations can be combined with traditional subtractive manufacturing methods to decrease material waste or reduce manufacturing time at the cost of increased plan complexity. Plans which mix additive and subtractive operations in this way are called hybrid manufacturing plans. Disclosed embodiments include systems and methods for automatic generation and execution of hybrid manufacturing plans.

A "plan" refers to a sequence of operations which result in a transformation of the workpiece from an initial state (i.e., a blank) to a target state (i.e., the part).

For example, consider a geometry such as a decorative vase or planter, where a number of small bosses protrude from a main body which otherwise has no surface features. The presence of these small features necessitates the mixing of rotationally symmetric milling operations to remove the excess material around the main body and precise, non-symmetric milling and drilling operations to produce the bosses. Furthermore, a large amount of raw material would be wasted if the workpiece is milled from a convex region encompassing bosses, rims, and ridges at the top of the part. On the other hand, a great deal less detail work and wasted material would be obtained by using additive manufacturing to build up the bosses from the main body after the initial shaping of a smaller initial workpiece.

The "workpiece," as described herein, refers to the state of the part or product being produced, either in the modelling/planning stages or as the physical workpiece during actual manufacture. The workpiece should be tracked as it moves through the manufacturing process. The modelled workpiece can include geometric primitives which can be combined to form the whole part, their topological relationships, and descriptive attributes for each component primitive.

In various embodiments, hybrid manufacturing solutions include addressing issues such as the capture and encoding of expert knowledge and intuition developed in the separate domains of traditional subtractive machining and recently developed additive manufacturing processes. Disclosed embodiments include synthesis of expert knowledge from isolated domains (*e.g.*, subtractive and additive manufacturing) into a single knowledge base which can be drawn upon to make decisions regarding hybrid manufacturing processes. Disclosed embodiments include automatic generation and evaluation of plans combining additive and subtractive processes and machining tools, thereby decreasing the manual testing iterations required by an engineer to find feasible plans for complex designs. Disclosed embodiments can rank many possible plans based on user specified criteria (e.g., based on time, material, or capital costs to use specific machines in the manufacturing process).

Disclosed embodiments include systems and methods for automated computer-aided process planning (CAPP) for hybrid manufacturing that can identify non-trivial, qualitatively distinct, and cost-optimal combinations of additive manufacturing/subtractive manufacturing techniques to produce a physical product from a workpiece, where the workpiece can be modified using additive-manufacturing operations in some portions and performing subtractive manufacturing operations on some portions.

Disclosed embodiment can employ a graph-based representation and update rules. Manufacturing operations are encoded as graph transformations which modify the workpiece state. A complete manufacturing plan can be obtained, for example, by using an A* search guided by supplied cost and heuristic functions.

Unlike other methods, various embodiments utilize a database to automatically construct update rules relevant to the particular build environment (e.g., tools, materials, and part features). A "rule," as used herein, defines a single atomic change to the work- piece state. Rules should be divided into the smallest possible components in order to maximize their generality. Many of these small rules can then be combined into an operation. Rules are associated with types of machines and tools in the ontology. The ontology, as used herein, is a data model which provides information about a domain (for example, manufacturing) with the aid of relationships established among various concepts (for example, design features, machining operations, machine attributes) under that particular domain. The ontological framework has a logical foundation which supports various types of reasoning that lead to knowledge discovery as well as information retrieval.

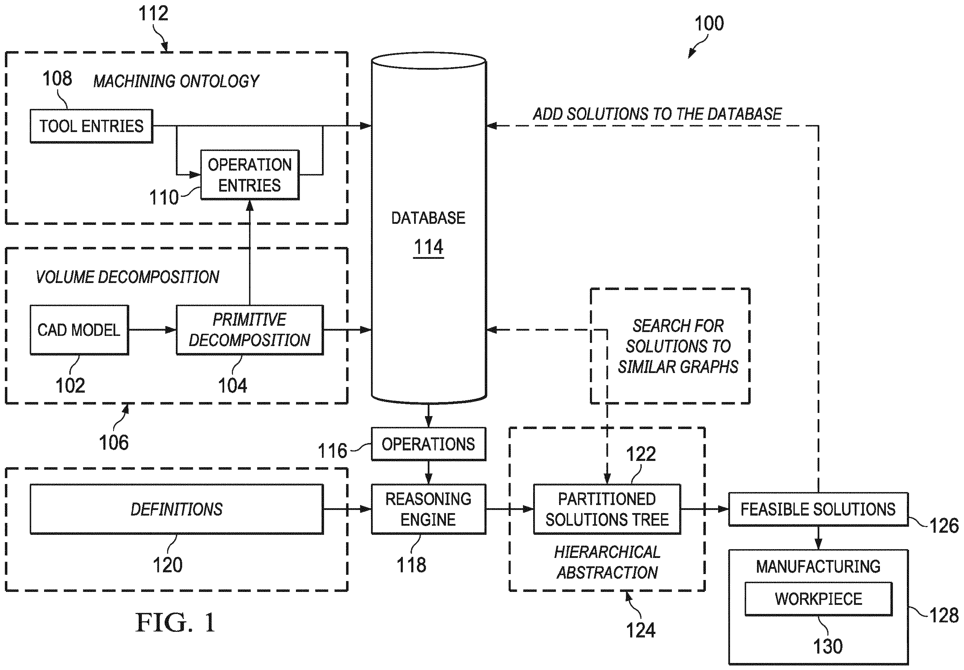

Figure 1 illustrates a functional block diagram of elements of a hybrid manufacturing system 100 in accordance with disclosed embodiments.

From the end user's perspective, the input to the system 100 is a CAD model 102 and tool entries 108 which describes tools available for the manufacturing process. CAD model 102 represents the part/product to be manufactured from physical workpiece 130. The CAD model 102 is used to produce a primitive decomposition 104 which includes regions and possible states. A volume decomposition 106 is one non-limiting example of a primitive decomposition 104. CAD model 102 and primitive decomposition 104 can be stored in and instantiated against a machining ontology 112 which exists in a persistent database 114.

Tool entries 104 define the properties of the available tools such as capability, availability, geometry, etc. Tool entries 104 can be associated with operations entries 110, which include such data as the state changes for each region and linked tool. Tool entries 108 and operations entities 110 together can form the machining ontology 112 stored in database 114.

An "operation," in this context, defines a transformation of the workpiece from one state to another. It modifies only the attributes of the workpiece, and not its intrinsic structure. Operations are constructed by combining one or more rules and associating them with a particular tool and geometric primitive in the workpiece.

Operations 116, that describe how each available tool acts on each geometric primitive in order to manufacture the workpiece 130, are fed into a reasoning engine 118. Reasoning engine 118 evaluates geometric relationships between proposed or possible operations to produce a partitioned solutions tree 122. Reasoning engine 118 can also use definitions 120, such as costs and heuristics, that can be retrieved, for example, from database 114.

Hierarchical abstraction 124 can be utilized to partition the search into manageable domains, such as by splitting the graph represented by the partitioned solutions tree 122 into cells for efficient evaluation, and a cost function can be evaluated to determine a short list of the most promising manufacturing plans as feasible solutions 126. The partitioned solutions tree 122, any of the hierarchical abstractions 124, the cells from the split graph, and /or the feasible solutions 126 can be checked against the database 114 for similar workpieces and solutions to build a knowledgebase regarding manufacturability of each part feature and effectiveness of each available tool.

Finally, one or more of the feasible solutions 126 can be sent for physical manufacturing 128 using the physical machinery and tools defined above for the tool entries 108, operations entries 110, and/or machining ontology 112. Physical manufacturing 128 produces a physical manufactured part from workpiece 130 according to one or more of the feasible solutions 126, for example as may be selected by a user, determined to be least expensive to produce, determined to use or waste the least amount of material, determined to be fastest to produce, or otherwise.

Disclosed embodiments use a graph-based workpiece representation to represent the workpiece and product to be manufactured. A graph-based representation is used because it requires little adaptation of conventional search algorithms. According to various embodiments, each node in the graph represents a solid body, which means that edges represent surfaces between those bodies. This representation provides specific advantages because manufacturing tools most often act on 3D volumes or 2D surfaces, and not on lower-dimensional primitives such as edges or nodes.

An attributed adjacency graph (AAG) gives a topological description of geometric primitives. Each of these geometric primitives is stored as a node in a graph, and attributes describing those primitives are attached to the nodes. The AAG approach encodes the most relevant geometrical information in a way that it can be queried and understood by purely graph-based reasoning.

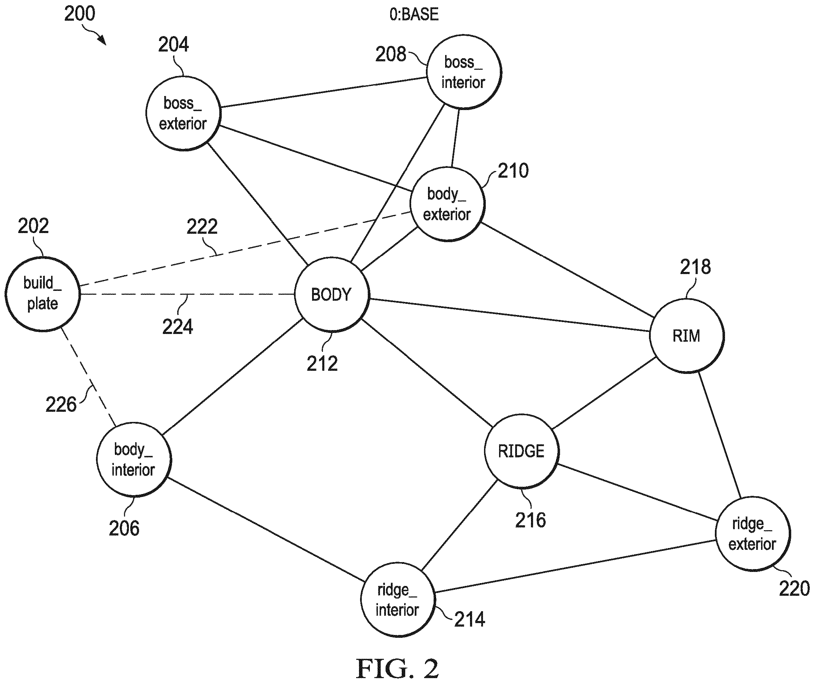

Figure 2 illustrates an example of a workpiece state as graph-based workpiece representation 200 in accordance with disclosed embodiments. This figure represents a desired workpiece final state for a given workpiece geometry. Each node (represented by circles, such as nodes 202, 204, 206, 208, 210, 212, 214, 216, 218, and 220) and edge (represented by lines, including edges 222, 224, and 226) is associated with attributes such as the volume or surface area, orientation, and centroid. As described above, each node can represent a surface, such as a "rim" represented by node 218 in this example, and each edge can represent a connection or relationship between the surfaces, such as edge 224 connecting build-plate node 202 to body node 212. These examples are of static quantities, which do not change during the course of the manufacturing process. State elements may also be associated with dynamic attributes such as the comprising material, level of detail, or finish tolerance. For instance, additive processes often deposit material in discrete layers along a build axis, which constitutes a lower level of detail than the smoothed surfaces desired in the final part.

Disclosed embodiments use a rules representation to determine and define the manufacturing operations. The workpiece state represents the state of a virtual workpiece during the manufacture planning processes described herein, which will eventually correspond to the state(s) of the physical workpiece 130 during physical manufacturing operations. The system modifies the workpiece state by applying operations, which are defined by entries comprising region, modifier, and tool.

The region entry defines the node upon which the modifier operates, which the tool physically interacts with during the manufacturing operation. For 3D operations, this can mean removing or adding material in that region, but the region is also relevant to 2D operations because the tool must pass through the enclosed space in order to act on adjacent faces.

The modifier entry defines a generic description of how to update the dynamic properties associated with that region. For instance, the modifier of an operation may specify that material should be removed in the specified region for subtractive operations such as milling.

The tool entry defines or contains links to descriptive information such as constraints to the size or shape of a region or the nominal cost of using the tool (e.g., time per unit volume). Tools are also associated with machines, which have attributes such as degrees of freedom and the cost of changing tools.

Given a workpiece state and an operation, the system performs the transformation Sᵢ → Sᵢ₊₁ according to an update rule. The update rules can be received by the system such as by being received from a user, loaded from a database, received from another device or process, or otherwise. The system evaluates the update rules using the reasoning engine to produce a new workpiece state. In practice, update rules can be constructed from one or more rule primitives associated with elements of the proposed operation.

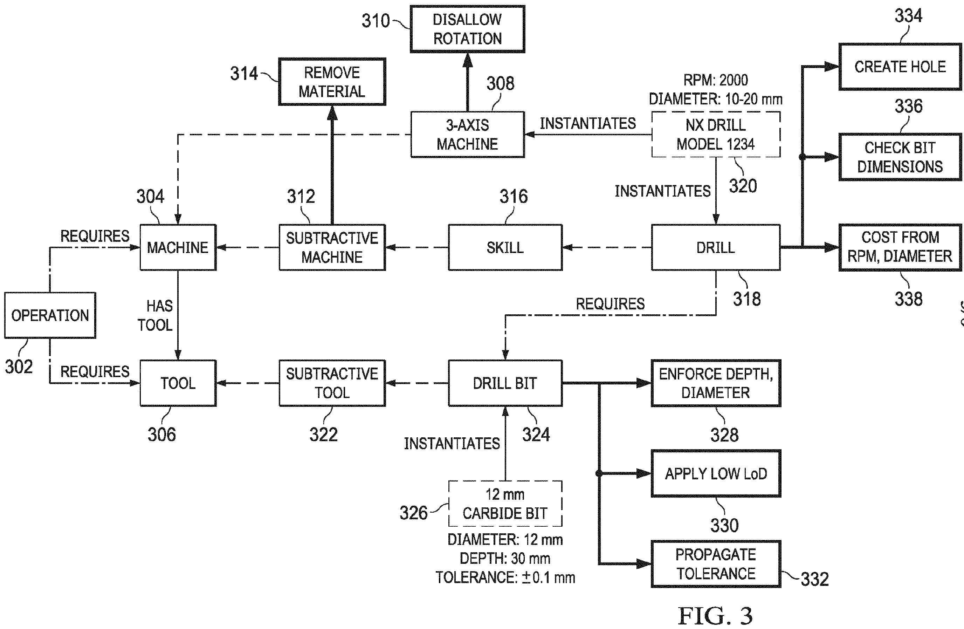

Figure 3 illustrates an example of all subtractive manufacturing tools being linked to a rule primitive describing how to remove material through the manufacturing ontology. In this example, an operation rule 302 requires a machine 304 and its associated tool 306. Machine 304 has a property 308 that defines it as a 3-axis machine, which in turn has a constraint 310 that disallows rotation. Machine 304 has a second property 312 that defines it as a subtractive machine, defined by constraint 314 as a machine that removes material. Property 312 (subtractive machine) has a further property 316 defining its skill as drill 318, which is an instantiation of drill definition 320 (NX drill model 1234, with a defined speed and diameter). Drill definition 320 is also used to instantiate property 308 (3-axis machine). Drill 318 has modifications, in this example, such as create hole 334, a constraint of check bit dimensions 336, and costs such as cost from RPM and diameter 338.

Similarly, tool 306 has a property 322 that defines it as a subtractive tool, with a further property 324 of a specific drill bit, required by drill 318. Drill bit 324 is an instantiation of a specific bit definition 326, in this case a 12mm carbide bit with specific diameter, depth, and tolerance. Drill bit 324 has constraints, in this example, such as enforce depth and diameter 328, and modifications such as apply low level of detail 330 and propagate tolerance 332.

Keeping the scope of these rule primitives small makes it easy to assemble complex update rules for a wide range of manufacturing scenarios.

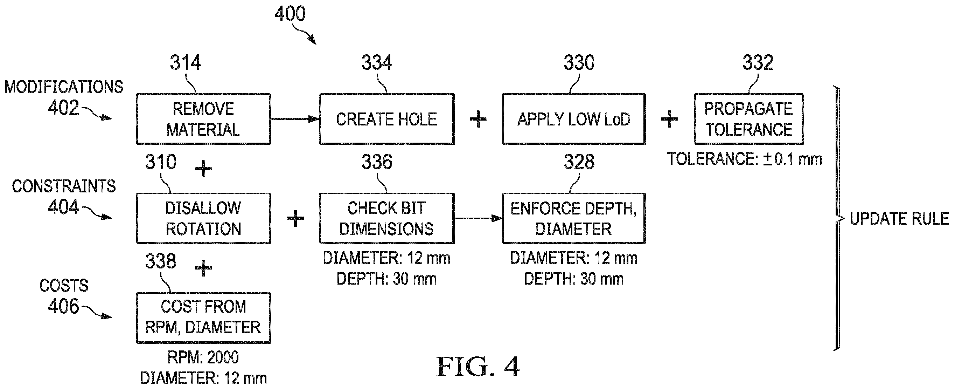

For instance, Figure 4 illustrates how rule primitives extracted from the ontology in Fig 3. can be combined to form a complete update rule for a drill with a specific drill bit. In practice, the ontology would link to modular functions in addition to the descriptive tags shown in Fig 3. These functions would be combined by a rule-combination protocol to provide a complete update rule to the reasoning engine for use in searching the state space.

Fig. 4 illustrates an update rule 400 composed of rule primitives, in accordance with disclosed embodiments. An update rule can combine modifications 402, constraints 404, and costs 406. In this non-limiting example, corresponding to the example of Fig. 3, modifications 402 can include remove material 314, create hole 334, apply low level of detail 330, and propagate tolerance 332. Constraints 404 can include disallow rotation 310, check bit dimensions 336, and enforce depth and diameter 328. Costs 406 can include costs from RDM and diameter 338.

The system performs process planning. In some embodiments, given the list of available operations (i.e., update rules), a best-first search is performed in the state space using the A* (A-star) algorithm. Even with fast evaluations and a good heuristic, the branching factor of the resulting solutions tree can be too high to find complete solutions in a reasonable time. The system can therefore employ several strategies to compress the number of possible states visited before finding a complete solution.

Since composite update rules are generated from the manufacturing ontology, they retain a link to the intent of each primitive. This means that hierarchical abstraction may be used to partition the overall search task into sub-tasks with checkpoints along the way.

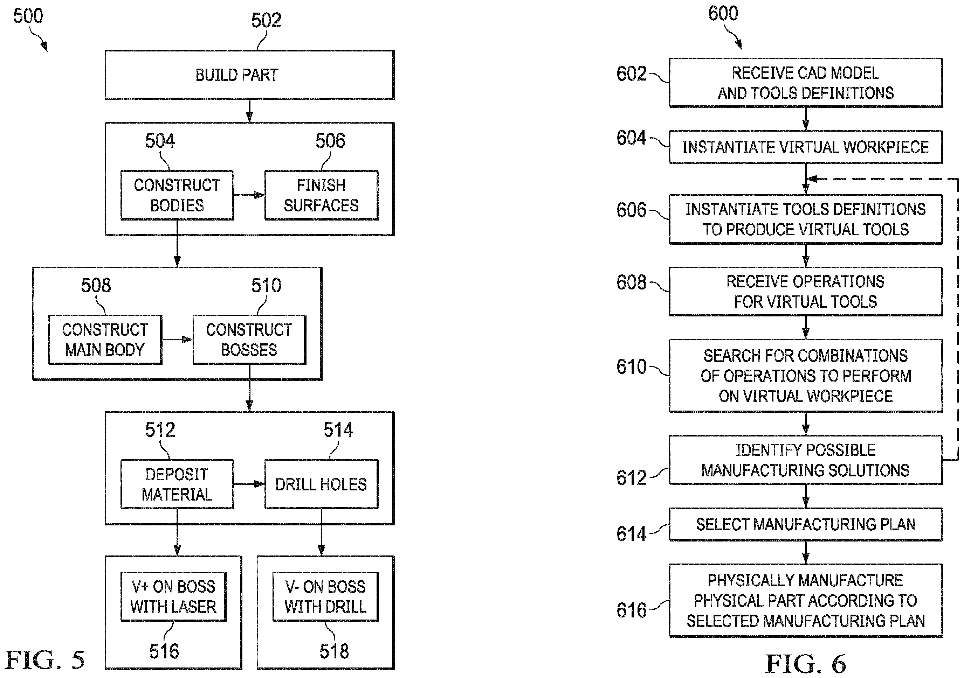

Figure 5 illustrates a schematic representation 500 of partitioning in accordance with disclosed embodiments. Because the number of possible permutations is factorial in the length of the task, this partitioning greatly reduces the size of the solutions tree.

This example shows a root node of build part 502. Build part 502 is partitioned into construct bodies 504 and finish surfaces 506. Construct bodies 504 is partitioned into construct main body 508 and construct bosses 510. Construct bosses 510 is partitioned into deposit material 512 and drill holes 514. Deposit material 512 is converted to an action of performing additive operation on boss with laser 516, while drill holes 514 is converted to an action of performing subtractive operations on boss with drill 518.

A route to the target state passes through a small number of these checkpoints which greatly reduces the number of branches deep in the tree. Likewise, the priority queue records states rather than paths; only the best way to reach any given state is recorded in the queue. This eliminates cycles and further reduces the branching factor deep in the tree.

The state space explorer returns a set of approximate best solutions to the requested transformation after a finite number of branching iterations. These are not guaranteed to be the best solutions unless the algorithm is allowed to exhaust the solutions tree. Convergence can be estimated by monitoring the costs of candidate solutions as they are discovered. If the cost of new solutions is monotonically increasing over a sufficient number of samples, it is probable that additional solutions will continue to increase in cost. The width of the tree can also be limited to avoid over-populating the space with solutions which are not likely to result in viable plans.

The disclosed embodiments therefore provide an integrated system to generate optimal (hybrid) manufacturing operations from a given CAD file of a part. Where other manufacturing planning solutions focus on capturing geometric feasibility to generate plans, disclosed embodiment can incorporate expert knowledge into a framework for a wide variety of manufacturing domains. Disclosed systems can construct proposed operations from primitives stored in a manufacturing ontology rather than encoding rules on a case-by-case basis. Disclosed systems can extract intent from rule primitives to create human-readable plans using a hierarchical task planning approach.

Disclosed embodiments provide significant technical improvements over other systems. For example, disclosed embodiments enable fast generation of hybrid manufacturing plans and a flexible framework which can be adapted to new manufacturing tasks. Disclosed embodiments can encapsulate the domain expert (manufacturing engineer) knowledge in the form of ontology and manufacturing rules.

Figure 6 illustrates a process 600 in accordance with disclosed embodiments that can be performed in a system as described herein, referred to generically as the "system" below. The process illustrated in Fig. 6 can be combined with or implemented in conjunction with any other processes, devices, techniques, or features as described herein. At each step described herein, the system can store or display the relevant data.

The system receives a computer-aided-design (CAD) model of a part to be manufactured and tools definitions of tools available for a manufacturing process (602). "Receiving," as used herein, can include receiving via an interaction with a user, loading from storage, receiving from another device or process, or otherwise. The tools definitions correspond to physical tools and corresponding virtual tools.

The system instantiates a virtual workpiece (604). The virtual workpiece corresponds to a physical workpiece from which the part to be manufactured can be physically manufactured. The virtual workpiece can be stored as a graph-based representation including a plurality of nodes and edges as described herein.

The system instantiates the tools definitions against a manufacturing ontology to produce virtual tools (606).

The system receives operations for the virtual tools (608), wherein the operations define how each virtual tool can act on the virtual workpiece. Correspondingly, the operations define how the physical tools can act on a physical workpiece. The operations can include both additive-manufacturing operations and subtractive-manufacturing operations. Each operation can include a region, a modifier, and a tool.

The system searches for combinations of the operations to be performed on the virtual workpiece to make the virtual workpiece correspond to the CAD model (610). This process can include performing hierarchical abstraction to partition the search into a plurality of domains. This process can include applying a cost function to select or eliminate some combinations of operations. This process can include applying operations to the virtual workpiece, such as by applying update rules and/or transformations as described herein, to modify the state of the virtual workpiece. The search can be performed using an A* algorithm and/or other techniques as described herein.

The system identifies possible manufacturing solutions according to the search (612). The possible manufacturing solutions are the combinations of operations that can be performed on the virtual workpiece to make the virtual workpiece correspond to the CAD model. The possible manufacturing solutions can include both additive-manufacturing operations and subtractive-manufacturing operations. This process can include validating the possible manufacturing solutions against stored solutions or stored virtual workpieces.

The system can select a manufacturing plan from the possible manufacturing solutions (614). This can include receiving a selection criterion and basing the selection on the selection criterion. The selection criterion can be, for example, which possible manufacturing solution is least expensive to produce, which possible manufacturing solution is determined to use the least amount of material, which possible manufacturing solution is determined to waste the least amount of material, which possible manufacturing solution is determined to be fastest to produce, or otherwise.

The system can physically manufacture a physical part from a physical workpiece according to the selected manufacturing plan (616). The manufactured part can correspond to the CAD model.

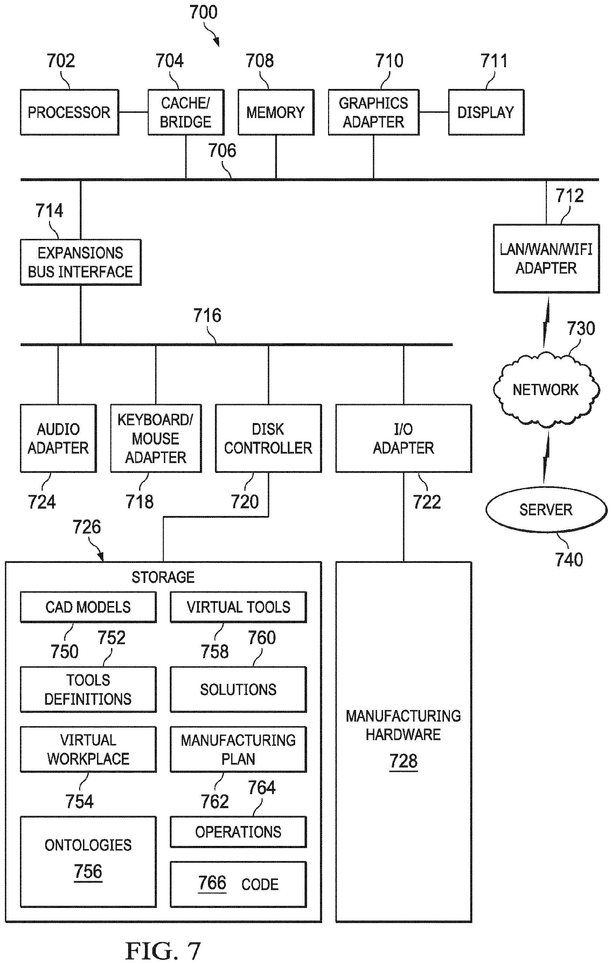

Figure 7 illustrates a block diagram of a data processing system 700 in which an embodiment can be implemented, for example as part of a system as described herein, or as a control system as described herein, particularly configured by software or otherwise to perform the processes as described herein, and in particular as each one of a plurality of interconnected and communicating systems as described herein. The data processing system depicted includes a processor 702 connected to a level two cache/bridge 704, which is connected in turn to a local system bus 706. Local system bus 706 may be, for example, a peripheral component interconnect (PCI) architecture bus. Also connected to local system bus in the depicted example are a main memory 708 and a graphics adapter 710. The graphics adapter 710 may be connected to display 711.

Other peripherals, such as local area network (LAN) / Wide Area Network / Wireless (*e.g.* WiFi) adapter 712, may also be connected to local system bus 706. Expansion bus interface 714 connects local system bus 706 to input/output (I/O) bus 716. I/O bus 716 is connected to keyboard/mouse adapter 718, disk controller 720, and I/O adapter 722. Disk controller 720 can be connected to a storage 726, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Storage 726 can store any data, instructions, or code useful or necessary for performing processes herein, including but not limited to CAD models 750, tools definitions 752, virtual workpieces 754, ontologies 756, virtual tools 758, solutions 760, manufacturing plans 762, operations 764, and executable code 766.

Also connected to I/O bus 716 in the example shown is audio adapter 724, to which speakers (not shown) may be connected for playing sounds. Keyboard/mouse adapter 718 provides a connection for a pointing device (not shown), such as a mouse, trackball, trackpointer, touchscreen, etc. I/O adapter 722 can be connected to communicate with or control manufacturing hardware 728, which can include additive-manufacturing equipment such as 3D printing devices, sensors, imagers, systems, and other AM tools, materials, and machines, and can include subtractive manufacturing equipment such as mills, drills, or other SM tools, materials, and machines, and can include other devices or hardware described herein.

Those of ordinary skill in the art will appreciate that the hardware depicted in Figure 7 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 712 can be connected to a network 730 (not a part of data processing system 700), which can be any public or private data processing system network or combination of networks, as known to those of skill in the art, including the Internet. Data processing system 700 can communicate over network 730 with server system 740 (such as cloud systems as described herein), which is also not part of data processing system 700, but can be implemented, for example, as a separate data processing system 700.

Of course, those of skill in the art will recognize that, unless specifically indicated or required by the sequence of operations, certain steps in the processes described above may be omitted, performed concurrently or sequentially, or performed in a different order.

Other aspects of additive, subtractive, or hybrid manufacturing are disclosed in the following documents, each of which is hereby incorporated by reference:
- Mazin Al-wswasi, Atanas Ivanov, and Harris Makat- soris. A survey on smart automated computer-aided process planning (acapp) techniques. The International Journal of Advanced Manufacturing Technology, pages 1-24, 2018.
- Sanjay Joshi and Tien-Chien Chang. Graph-based heuristics for recognition of machinedfeatures from a 3d solid model. Computer-Aided Design, 20(2):58-66, 1988.
- Mohamed El-Mehalawi. A geometric similarity case- based reasoning system for cost estimation in net-shape manufacturing. PhD thesis, The Ohio State University, 1999.
- Wentao Fu, Ata A Eftekharian, and Matthew I Campbell. Automated manufacturing planning approach based on volume decomposition and graph-grammars. Journal of Computing and Information Science in Engineering, 13(2):021010, 2013.
- Wentao Fu, Ata A Eftekharian, Pradeep Radhakrish- nan, Matthew I Campbell, and Christian Fritz. A graph grammar based approach to automated manufacturingplanning. In ASME 2012 International Design Engineering Technical Conferences and Computers and Information in Engineering Conference, pages 77-88. American Society of Mechanical Engineers, 2012.
- Ata A Eftekharian and Matthew I Campbell. Convex decomposition of 3d solid models for automated manufacturing process planning applications*.*

In ASME 2012 International Design Engineering Technical Conferences and Computers and Information in Engineering Conference, pages 727-735. American Society of Mechanical Engineers, 2012.
- Flavien Boussuge, Jean-Claude L'eon, Stefanie Hahmann, and Lionel Fine. Extraction of generative processes from b-rep shapes and application to idealization transformations. Computer-Aided Design, 46:79- 89, 2014.
- Dana S Nau, Sandeep K Gupta, and William C Regli. Ai planning versus manufacturing-operation planning: A case study. Technical report, 1995.
- Saigopal Nelaturi, Mikola Lysenko, and Vadim Shapiro. Rapid mapping and exploration of configuration space. Journal of Computing and Information Science in Engineering, 12(2):021007, 2012.
- Peter E Hart, Nils J Nilsson, and Bertram Raphael. A formal basis for the heuristic determination of minimum cost paths. IEEE transactions on Systems Science and Cybernetics, 4(2):100-107, 1968.
- Rina Dechter and Judea Pearl. Generalized best-first search strategies and the optimality of a. Journal of the ACM (JACM), 32(3):505-536, 1985.
- Frank W Liou, J Choi, Robert G Landers, Vijayaku- mar Janardhan, SN Balakrishnan, and Sanjeev Agarwal. Research and development of a hybrid rapid man- ufacturing process. In Proceedings of the Solid Freeform Fabrication Symposium, pages 138-145. Citeseer, 2001.
- Saigopal Nelaturi, Gregory Burton, Christian Fritz, and Tolga Kurtoglu. Automatic spatial planning for machining operations. In Automation Science and Engineering (CASE), 2015 IEEE International Conference on, pages 677-682. IEEE, 2015.
- Morad Behandish, Saigopal Nelaturi, and Johan de Kleer. Automated process planning for hybrid manufacturing. Computer-Aided Design, 102:115-127, 2018.
- Dinar M, Rosen DW. A Design for Additive Manufacturing Ontology. ASME. International Design Engineering Technical Conferences and Computers and Information in Engineering Conference, Volume 1B: 36th Computers and Information in Engineering Conference (2016).
- Munira Mohd Ali, Rahul Rai, J. Neil Otte, and Barry Smith. A Product Life Cycle Ontologyfor Additive Manufacturing. Journal of Computers in Industry, Volume 105, Pages 191-203 (2019).

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 700 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke 35 USC §112(f) unless the exact words "means for" are followed by a participle. The use of terms such as (but not limited to) "mechanism," "module," "device," "unit," "component," "element," "member," "apparatus," "machine," "system," "processor," or "controller," within a claim is understood and intended to refer to structures known to those skilled in the relevant art, as further modified or enhanced by the features of the claims themselves, and is not intended to invoke 35 U.S.C. §112(f).

## Claims

1. A process (600) performed by at least one data processing system (700), comprising:
receiving (602), by the data processing system (700), a computer-aided-design (CAD) model (750) of a part to be manufactured and tools definitions (752) of tools available for a manufacturing process;
instantiating (604) a virtual workpiece (754);
instantiating (606) the tools definitions (752) against a manufacturing ontology (756) to produce virtual tools (758);
receiving (608) operations (764) for the virtual tools (758);
searching (610) for combinations of the operations (764) to be performed on the virtual workpiece (754) to make the virtual workpiece (754) correspond to the CAD model (750);
identifying (612) possible manufacturing solutions (760) according to the search; and
selecting (614) a manufacturing plan (762) from the possible manufacturing solutions (760).

2. The process of claim 1, further comprising physically manufacturing (616) the part from a physical workpiece (130) according to the selected manufacturing plan (762).

3. The process of any of claims 1 or 2, wherein the virtual workpiece (754) is stored
as a graph-based representation (200) including a plurality of nodes (202, 204, 206) and edges (222, 224, 226), each node (202, 204, 206) representing a surface.

4. The process of any of claims 1 - 3, wherein the operations (764) define how each virtual tool (758) can act on the virtual workpiece (754).

5. The process of any of claims 1 - 4, wherein the operations (764) include both additive-manufacturing operations and subtractive-manufacturing operations.

6. The process of any of claims 1 - 5, wherein each operation (764) includes a region, a modifier, and a tool.

7. The process of any of claims 1 - 6, wherein the data processing system (700) performs hierarchical abstraction (610) to partition the search into a plurality of domains.

8. The process of any of claims 1 - 7, wherein the data processing system (700) applies (610) update rules or transformations to modify a state of the virtual workpiece (754).

9. The process of any of claims 1 - 8, wherein the search (610) is performed using
an A* algorithm.

10. A system (700) comprising:
a processor (702); and
an accessible memory (708), wherein the processor (702) is configured to perform a process as in any of claims 1 - 9.

11. A non-transitory computer-readable medium (726) storing executable instructions (766) that, when executed, cause a control system (700) to perform a process as in any of claims 1 - 9.
